# EUROPÄISCHE PATENTSCHRIFT

(11) **EP 3 524 749 B1**
(45) Veröffentlichungstag und Bekanntmachung des Hinweises auf die Patenterteilung: **30.11.2022**
(21) Anmeldenummer: 19152430.5
(22) Anmeldetag: 18.01.2019
(51) Int. Cl.: E04D 13/064, F16B 2/24, F16L 37/08, E04D 13/08

(54) **VERBINDUNG VON ENTWÄSSERUNGSKOMPONENTEN UND ROHRSTUTZEN MIT EINER KLEMMFEDER**
CONNECTION OF DRAINAGE COMPONENTS AND PIPE ELEMENT WITH A CLAMP SPRING
CONNEXION DE COMPOSANTS DE DRAINAGE ET ÉLÉMENT DE TUYAU AVEC ÉLÉMENT DE RESSORT

(30) Priorität: 09.02.2018 DE 102018202029
(43) Veröffentlichungstag der Anmeldung: 14.08.2019
(73) Patentinhaber: RÖSLE GROUP GmbH, 87616 Marktoberdorf (DE)
(72) Erfinder: Greisel, Erwin, 87675 Stötten am Auberberg (DE)
(74) Vertreter: Dr. Weitzel & Partner

(56) Entgegenhaltungen:
- EP-A2- 1 531 208
- EP-A2- 1 722 145
- EP-B1- 1 722 145
- DE-A1- 10 160 194
- GB-A- 1 168 788
- GB-A- 1 555 767
- US-A- 357 893
- US-A- 2 810 173
- US-A1- 2002 130 237
- US-A1- 2005 166 465
- US-A1- 2016 073 549

## Beschreibung

Die vorliegende Erfindung betrifft eine Verbindung von Entwässerungskomponenten, insbesondere zur Verbindung von Dachentwässerungskomponenten, beispielsweise zum Anschluss eines Rohrbogens oder eines Fallrohrs an einen Einlauftrichter oder Wasserfangkasten eines Dachentwässerungssystems. Sie betrifft auch einen Rohrstutzen mit einer Klemmfeder.

An Dachrinnen, welche Regenwasser von Gebäudedächern aufnehmen und die entsprechend mit Rinnenhaltern entlang des unteren Randes von Dächern befestigt werden, werden in der Regel Einlauftrichter angeschlossen, die das Wasser aus der Dachrinne sammeln und über wenigstens einen zwischengeschalteten Rohrbogen oder unmittelbar an ein angeschlossenes Fallrohr übergeben. Bei Flachdächern ist in der Regel ein Wasserfangkasten vorgesehen, der das vom Flachdach aufgenommene Wasser entsprechend an einen Rohrbogen oder direkt an ein Fallrohr übergibt. Entsprechende Einlauftrichter und Wasserfangkästen sind in der Regel nur schwer erreichbar in einer großen Höhe entfernt vom Erdboden positioniert. Wenn sich beispielsweise durch die Gewichtskraft oder durch Spannungen der Rohrbogen oder das Fallrohr vom Einlauftrichter oder Wasserfangkasten löst, ist der Aufwand einer erneuten Befestigung mitunter erheblich. Daher werden die Rohrbögen oder die Fallrohre in der Regel gesondert an den Einlauftrichtern oder Wasserfangkästen befestigt, um ein unbeabsichtigtes Lösen zu vermeiden. Selbstverständlich ist eine solche gesonderte Befestigung auch zwischen Rohrbögen oder einem Rohrbogen und dem Fallrohr oder an anderen Positionen im Dachentwässerungssystem möglich.

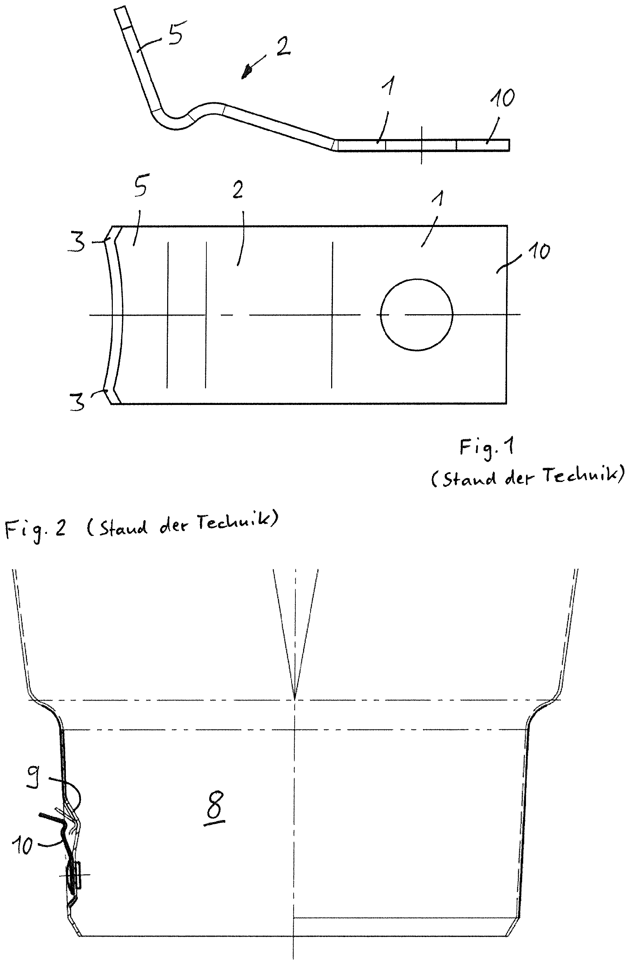

Die gesonderte Befestigung kann beispielsweise durch Verschrauben erfolgen, indem die miteinander zu befestigenden Komponenten aufeinander geschoben werden und anschließend von außen eine Blechschraube eingedreht wird. Dies hat den Nachteil, dass die Blechschraube die in der Regel verzinkte Entwässerungskomponente beschädigt, was zu Korrosion und einer unerwünschten Undichtigkeit führen kann, und zudem das Einbringen der Schraube einen zusätzlichen Aufwand bei der Montage bedeutet. Es wurde daher bereits eine Klemmfeder zur Verbindung eines Rohrbogens oder eines Fallrohres mit einem Einlauftrichter vorgeschlagen, wie sie in der Figur 1 dargestellt ist. Eine solche Klemmfeder 10 weist einen Fußteil 1 auf, der eben ist und mit welchem die Klemmfeder 10 von außen auf dem Rohrstutzen des Einlauftrichters angenietet wird. An den Fußteil 1 schließt sich ein Federteil 2 an, der dieselbe Breite wie der Fußteil 1 aufweist und der mit einem stumpfen Winkel gegenüber dem Fußteil 1 abgewinkelt ist, wobei ein Endabschnitt 5, der zwei Krallen 3 trägt, etwas stärker abgewinkelt ist, damit sich die Krallen 3 fest in das Material des über den Rohrstutzen geschobenen Rohrstückes krallen.

Um das Rohrstück über den Rohrstutzen mit dem angenieteten Federelement aufschieben zu können, weist der Einlauftrichter eine Einprägung auf, in die das Federelement eingesetzt ist und die eine Kontur entsprechend der Kontur des Federelementes aufweist, sodass das Federelement beim Aufschieben des Rohrstückes weitgehend in die Einprägung eingedrückt werden kann. Zur Verdeutlichung ist in der Figur 2 ein Querschnitt durch einen Einlauftrichter mit einem Rohrstutzen 8 dargestellt, welcher eine Einprägung 9 aufweist, in die ein Federelement 10 gemäß dem Stand der Technik eingesetzt ist.

In der Praxis hat sich nun herausgestellt, dass Situationen auftreten können, insbesondere wenn die Verbindung der Entwässerungskomponenten einer unmittelbaren starken Sonnenstrahlung ausgesetzt ist, bei welchen die Klemmkraft zwischen den Entwässerungskomponenten verstärkt werden sollte, um ein unbeabsichtigtes Lösen der Komponenten voneinander sicher zu vermeiden. Prinzipiell kann dies durch Einsetzen mehrerer Klemmfedern in mehrere Einprägungen im Rohrstutzen geschehen, wodurch annähernd die doppelte Klemmkraft erreicht werden kann, wenn zwei Klemmfedern vorgesehen sind, im Vergleich zum Vorsehen einer einzigen Klemmfeder. Jedoch erhöht die Anzahl der Klemmfedern auch die Herstellungskosten der entsprechenden Entwässerungskomponente, die mit den Klemmfedern versehen ist.

Andere Lösungen sehen vor, nicht nur die Entwässerungskomponente, welche die Klemmfeder trägt, sondern auch die Gegenkomponente, beispielsweise das Fallrohr oder den Rohrstutzen, mit einer Einprägung zu versehen, in welche eine Klemmfeder formschlüssig einrasten kann. Auch diese Lösung ist mit einem erhöhten Aufwand und damit erhöhten Kosten bei der Herstellung der Komponenten verbunden. Zudem wird die Montage verkompliziert, da sichergestellt werden muss, dass die Klemmfeder ausreichend in die Einprägung der Gegenkomponente einrastet und hierfür die beiden Komponenten geeignet zueinander in der Umfangsrichtung ausgerichtet werden.

Aus DE 101 60 194 A1 sind eine Verbindung von Entwässerungskomponente mit einer Klemmfeder und ein Rohrstutzen mit einer Klemmfeder bekannt.

Der vorliegenden Erfindung liegt die Aufgabe zugrunde, eine Verbindung von Entwässerungskomponenten, insbesondere Dachentwässerungskomponenten, anzugeben, die eine bessere Haltekraft zur Verfügung stellt und die Herstellungskosten der Komponenten sowie den Montageaufwand nicht erhöht.

Die erfindungsgemäße Aufgabe wird durch eine Verbindung mit den Merkmalen von Anspruch 1 und durch einen Rohrstutzen mit dem Merkmalen von Anspruch 9 gelöst. In den abhängigen Ansprüchen werden vorteilhafte und besonders zweckmäßige Ausgestaltungen einer erfindungsgemäßen Verbindung, bzw. eines erfindungsgemäßen Rohrstutzens, angegeben.

Die erfindungsgemäße Verbindung von Entwässerungskomponenten, insbesondere von Dachentwässerungskomponenten, weist eine Klemmfeder mit einem plattenförmigen Fußteil und einem sich an diesen anschließenden Federteil auf, wobei der Federteil an seinem vom Fußteil abgewandten freien Ende mit wenigstens einer Kralle versehen ist. Mit dieser Kralle kann sich die Klemmfeder in eine über sie geschobene Entwässerungskomponente einkrallen, wobei die Federkraft der Klemmfeder die Kralle in das Material der übergeschobenen Entwässerungskomponente eindrückt.

Erfindungsgemäß ist der Federteil mit einem Winkel von mehr als 90° gegenüber dem Fußteil umgekantet oder umgebogen. Das bedeutet, bei der Herstellung der Klemmfeder kann diese zunächst aus einem ebenen Blechteil, insbesondere Federstahl, hergestellt werden, beispielsweise durch Stanzen, und anschließend wird ein erster Teil gegenüber einem zweiten Teil um mehr als 90° umgekantet oder umgebogen, um den Federteil und den Fußteil auszubilden.

Erfindungsgemäß wird der Federteil ferner durch wenigstens zwei nebeneinander angeordnete, sich vom Fußteil aus erstreckende, unabhängig voneinander einfederbare Federzungen gebildet, die an ihrem vom Fußteil abgewandten freien Ende jeweils wenigstens eine Kralle aufweisen. Demgemäß bietet die Klemmfeder zwei unabhängig voneinander wirkende Federzungen, die, betrachtet in Richtung vom Fußteil zum Federteil in einer Breitenrichtung, die senkrecht zur Axialrichtung oder Richtung der Längsachse der Klemmfeder vom Fußteil zum Federteil verläuft, nebeneinander und insbesondere mit einem Abstand zueinander positioniert sind.

Durch diese Gestaltung der Klemmfeder kann eine mehr als doppelt so große Haltekraft zwischen den Entwässerungskomponenten im Vergleich zur eingangs beschriebenen in den Figuren 1 und 2 dargestellten Klemmfeder erreicht werden. Somit kann eine erfindungsgemäße Verbindung mit einer einzigen Klemmfeder eine größere Haltekraft gewährleisten, als bisher zwei separat zueinander vorgesehene Klemmfedern an ein und demselben Rohrstutzen. Dabei reduziert das Vorsehen nur einer einzigen Klemmfeder die Herstellungskosten gegenüber dem Vorsehen von zwei separaten Klemmfedern.

Insbesondere kann die erfindungsgemäße Verbindung mit einer Klemmfeder aus einem dünneren Material, beispielsweise Blech, insbesondere Federstahl, hergestellt werden, als die bisherige Klemmfeder und weist dennoch die überraschend große Klemmkraft auf. So kann die Klemmfeder beispielsweise zumindest im Bereich des Federteils oder im Federteil und Fußteil eine Stärke von weniger als 0,5 mm, insbesondere von 0,4 mm oder weniger aufweisen.

Das Umkanten oder Umbiegen des Federteils gegenüber dem Fußteil kann bevorzugt im kalten Zustand der Klemmfeder beziehungsweise eines Rohteils, aus dem die Klemmfeder hergestellt wird, erfolgen.

Die Gestaltung der Klemmfeder ermöglicht deren Einsatz in einer ebenen Einprägung in einem Rohrstutzen oder sogar auf einer Oberfläche eines Rohrstutzens, ohne dass an dieser Stelle eine Einprägung notwendig ist.

Die beiden unabhängig voneinander einfedernden Federzungen passen sich individuell an den ihnen jeweils gegenüberstehen Oberflächenabschnitt der übergeschobenen Entwässerungskomponente an. Durch ihre vergleichsweise geringe Breite greifen sie zudem besser in gekrümmte Oberflächenabschnitte ein.

Bevorzugt ist der Federteil um mehr als 120° oder mehr als 135° gegenüber dem Fußteil umgekantet oder umgebogen.

Jede Federzunge ist bevorzugt winklig ausgeführt, mit einem sich an den Fußteil anschließenden Steg und mit einem sich an den Steg an dem vom Fußteil abgewandten Ende anschließenden Endabschnitt, wobei der Endabschnitt an seinem freien Ende die wenigstens eine Kralle trägt und vom Steg in einer Richtung weg vom Fußteil, demnach in einer Richtung vom Fußteil gesehen nach außen abgekantet ist. Auch diese Abkantung kann einen Radius aufweisen. Der Steg kann sich beispielsweise zumindest im Wesentlichen parallel zum Fußteil erstrecken und der Endabschnitt kann sich mit einem spitzen Winkel zum Fußteil erstrecken.

Der Übergang vom Fußteil zum Federteil weist bevorzugt einen Radius auf, sodass demnach bevorzugt eine Umbiegung anstelle einer "scharfen" Umkantung vorgesehen ist. Der Radius beträgt insbesondere 1 mm oder weniger.

Gemäß einer Ausführungsform der Erfindung fallen die dem Fußteil zugewandten axialen Enden der Federzungen mit der Umkantung beziehungsweise dem Beginn der Umbiegung, betrachtet vom Fußteil aus, zusammen, sodass der Fußteil keinen dem Abstand zwischen den Federzungen entsprechenden Schlitz an seinem dem Federteil zugewandten axialen Ende aufweist. Eine alternative Ausführungsform sieht vor, dass der Fußteil an seinem den beiden Federzungen, das heißt dem Federteil zugewandten axialen Ende, bereits einen Schlitz entsprechend dem Schlitz oder dem Abstand zwischen den beiden Federzungen aufweist, demnach sich die Federzungen sozusagen bis in den Fußteil jenseits der Umbiegung oder Umkantung hinein erstrecken.

Bevorzugt weist jede Federzunge an ihrem freien Ende wenigstens zwei Krallen auf. Zwischen den Krallen kann insbesondere eine bogenförmige Kontur, bevorzugt konkave Kontur, des freien Endes vorgesehen sein.

Ein Abstand zwischen den Federzungen beträgt bevorzugt 1/4 oder 1/3 der Breite jeder Federzunge.

Die Federzungen weisen insbesondere identische Breiten auf und können auch im Übrigen identisch zueinander gestaltet sein.

Der Fußteil weist insbesondere wenigstens eine Bohrung für einen Niet oder eine Schraube auf.

Beispielsweise beträgt die Länge der Klemmfeder vor dem Umkanten oder Umbiegen 25 bis 40 mm, bevorzugt zwischen 30 und 35 mm. Nach dem Umbiegen oder Umkanten kann die Klemmfeder eine Länge von weniger als 25 mm aufweisen, in einer Draufsicht betrachtet.

Die Federzungen können insbesondere vor dem Umkanten oder Umbiegen eine Länge von 10 bis 20 mm aufweisen, beispielsweise von 14 bis 17 mm, insbesondere 15 mm. Wenn die Umbiegung oder Umkantung ausschließlich im Bereich der Federzungen durchgeführt wird, können diese entsprechend nach ihrem Umbiegen oder Umkantung eine vergleichsweise kürzere axiale Länge aufweisen, mit welcher sie oberhalb des Fußteils positioniert sind.

Der Steg einer jeden Federzunge weist vorzugsweise eine Länge auf, die ein Vielfaches der Länge des abgewinkelten Endabschnitts beträgt, beispielsweise das Dreifache, Vierfache oder mehr.

Ein erfindungsgemäßer Rohrstutzen weist eine Klemmfeder der dargestellten Art auf, wobei die Klemmfeder an einer äußeren oder inneren Oberfläche des Rohrstutzens, bevorzugt an einer äußeren Oberfläche des Rohrstutzens, befestigt ist und die Umkantung oder Umbiegung zwischen dem Fußteil und dem Federteil einem freien Ende des Rohrstutzens zugewandt ist. Das bedeutet, beim Aufschieben einer zweiten rohrförmigen Komponente auf den Rohrstutzen wird die zweite Komponente zunächst über die Umkantung oder Umbiegung hinweg geschoben, bevor sie in Kontakt mit den Krallen an den freien Enden der Federzungen gelangt.

Bevorzugt weist der Rohrstutzen eine Einprägung auf, in welche der Fußteil der Klemmfeder eingesetzt ist, wobei die Einprägung eben ausgeführt ist.

Ein solcher Rohrstutzen kann beispielsweise Bestandteil eines Einlauftrichters oder Wasserfangkastens sein, an welchen mittels des Rohrstutzens ein Rohrbogen oder Fallrohr angeschlossen wird.

Die Erfindung soll nachfolgend anhand eines Ausführungsbeispiels und den Figuren exemplarisch beschrieben werden.

Es zeigen:
- Figur 1: eine Klemmfeder gemäß dem Stand der Technik in einer Seitenansicht und einer Draufsicht;
- Figur 2: einen schematischen Querschnitt durch eine am Rohrstutzen eines Einlauftrichters montierte Klemmfeder gemäß dem Stand der Technik;
- Figur 3: ein Rohteil zur Herstellung einer Klemmfeder vor dem Umbiegen des Federteils;
- Figur 4: eine erfindungsgemäße Verbindung in einer Seitenansicht;
- Figur 5: einen erfindungsgemäßen Rohrstutzen mit Klemmfeder;

- Figur 6: einen Querschnitt durch den Rohrstutzen der Figur 5.

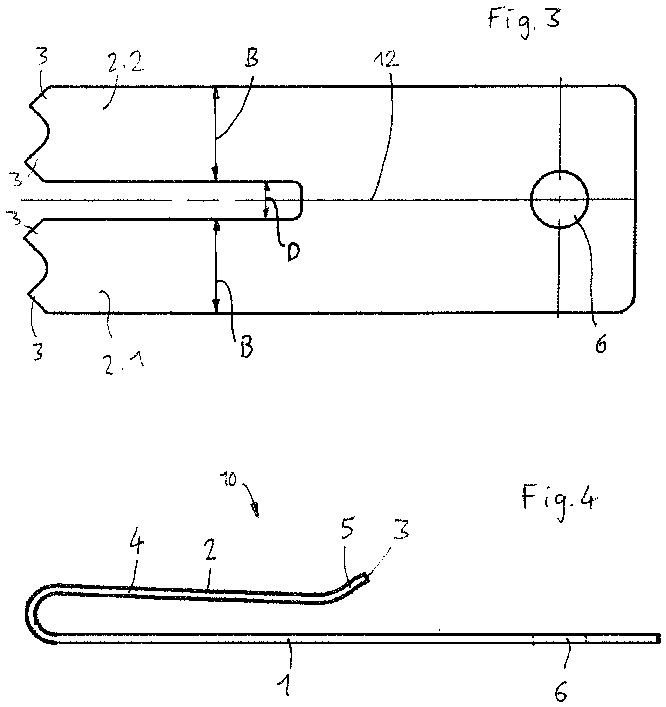

In der Figur 3 ist ein beispielsweise ausgestanztes Blechteil zur Herstellung einer erfindungsgemäßen Klemmfeder gezeigt, welches eine noch ebene Form aufweist. Aus diesem Rohteil wird die Klemmfeder 10 gemäß der Figur 4 durch Umbiegen des Federteils 2 gegenüber dem Fußteil 1 hergestellt. Der Fußteil 1 weist auch nach dem Umbiegen des Federteils 2 noch eine ebene Form auf. Im gezeigten Ausführungsbeispiel ist in den Fußteil 1 eine Bohrung 6 zum Einbringen eines Niet oder einer Schraube eingebracht, um die Klemmfeder 10 beispielsweise an einem Rohrstutzen zu befestigen.

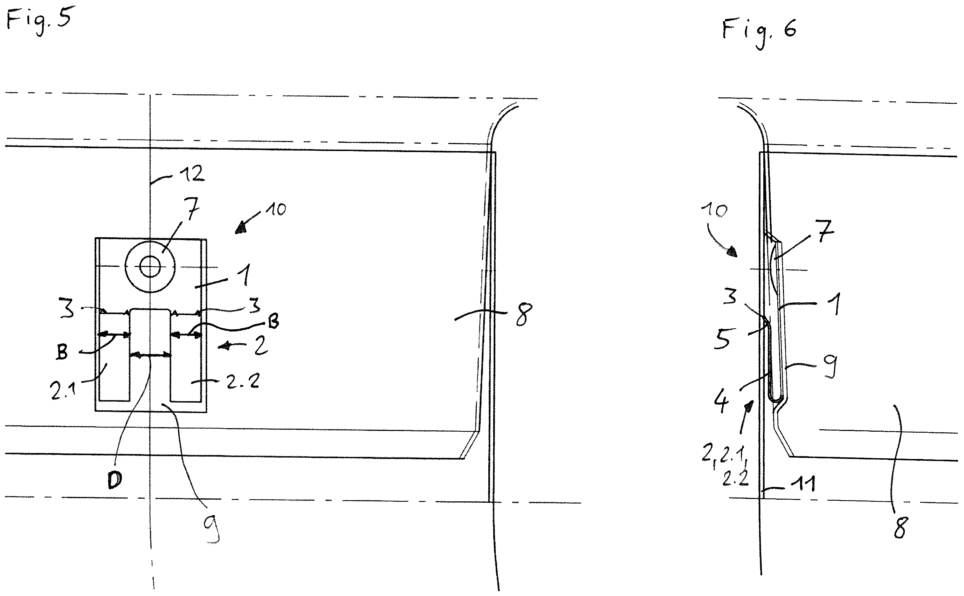

Wie man auch aus der Figur 5 erkennen kann, weist der Federteil 2 zwei einzeln einfederbare Federzungen 2.1, 2.2 auf, die an ihrem freien vom Fußteil 1 abgewandten Ende jeweils zwei Krallen 3 tragen. Der Federteil 2 beziehungsweise die Federzungen 2.1, 2.2 sind mit einem Winkel von wenigstens annähernd 180° gegenüber dem Fußteil 1 umgebogen, sodass ein Steg 4, der sich hinter der Umbiegung an den Fußteil 1 anschließt, im Wesentlichen parallel zum Fußteil 1 positioniert ist, wohingegen ein Endabschnitt 5 an dem dem Fußteil 1 abgewandten Ende des Stegs 4 in einem spitzen Winkel zum Fußteil 1 verläuft. Dieser Endabschnitt 5 trägt an seinem freien Ende die Krallen 3.

Die Krallen 3 greifen in das Material einer auf den Rohrstutzen 8, an welchem das Federelement 10 montiert ist, aufgeschobenen Entwässerungskomponente 11 ein, siehe besonders die Figur 6.

Der Fußteil 1 ist in eine Einprägung 9 des Rohrstutzens 8 eingesetzt, wobei die Einprägung 9, wie man aus der Figur 6 erkennen kann, im Unterschied zur Gestaltung gemäß der Figur 2, eben ausgeführt sein kann. Beispielsweise ist der Fußteil 1 mittels des Niet 7 in der Einprägung 9 befestigt.

Die beiden Federzungen 2.1, 2.2 weisen in der Breitenrichtung der Klemmfeder 10, die sich senkrecht zur hier dargestellten Längsachse 12 erstreckt, einen Abstand D auf, der beispielsweise wenigstens 1/4 oder 1/3 der Breite B jeder Federzunge 2.1, 2.2 beträgt.

### Bezugszeichenliste

- 1: Fußteil
- 2: Federteil
- 2.1,2.2: Federzunge
- 3: Kralle
- 4: Steg
- 5: Endabschnitt
- 6: Bohrung
- 7: Niet
- 8: Rohrstutzen
- 9: Einprägung
- 10: Klemmfeder
- 11: Entwässerungskomponente
- 12: Längsachse
- D: Abstand
- B: Breite

## Patentansprüche

1. Verbindung von Entwässerungskomponenten (8, 11) mit einer ersten Entwässerungskomponente (8), an deren Oberfläche eine Klemmfeder (10) befestigt ist, und einer zweiten Entwässerungskomponente (11), die über die Klemmfeder (10) geschoben ist, wobei die Klemmfeder (10) einen plattenförmigen Fußteil (1) und einen sich an diesem anschließenden Federteil (2) aufweist; wobei
der Federteil (2) an seinem vom Fußteil (1) abgewandten freien Ende wenigstens eine Kralle (3) aufweist; wobei
eine Federkraft der Klemmfeder (10) die wenigstens eine Kralle (3) in das Material der übergeschobenen Entwässerungskomponente (11) eindrückt; **dadurch gekennzeichnet, dass**
der Federteil (2) mit einem Winkel von mehr als 90° gegenüber dem Fußteil (1) umgekantet oder umgebogen ist und durch wenigstens zwei nebeneinander angeordnete, sich vom Fußteil (1) aus erstreckende, unabhängig voneinander einfederbare Federzungen (2.1, 2.2) gebildet wird, die an ihrem vom Fußteil (1) abgewandten freien Ende jeweils wenigstens eine Kralle (3) aufweisen.

2. Verbindung gemäß Anspruch 1, **dadurch gekennzeichnet, dass** der Federteil (2) um mehr als 120° oder 135° gegenüber dem Fußteil (1) umgekantet oder umgebogen ist.

3. Verbindung gemäß einem der Ansprüche 1 oder 2, **dadurch gekennzeichnet, dass** jede Federzunge (2.1, 2.2) winklig ausgeführt ist, mit einem sich an den Fußteil (1) anschließenden Steg (4) und einem sich an den Steg (4) an dem vom Fußteil (1) abgewandten Ende anschließenden Endabschnitt (5), der an seinem freien Ende die wenigstens eine Kralle (3) trägt und vom Steg (4) in eine Richtung weg vom Fußteil (1) abgekantet ist.

4. Verbindung gemäß Anspruch 3, **dadurch gekennzeichnet, dass** sich der Steg (4) zumindest im Wesentlichen parallel zum Fußteil (1) erstreckt und sich der Endabschnitt (5) mit einem spitzen Winkel zum Fußteil (1) erstreckt.

5. Verbindung gemäß einem der Ansprüche 1 bis 4, **dadurch gekennzeichnet, dass** die Federzungen (2.1, 2.2) an ihrem freien Ende jeweils wenigstens zwei Krallen (3) aufweisen.

6. Verbindung gemäß einem der Ansprüche 1 bis 5, **dadurch gekennzeichnet, dass** sich die Federzungen (2.1, 2.2) mit einem Abstand (D) parallel zueinander erstrecken.

7. Verbindung gemäß Anspruch 6, **dadurch gekennzeichnet, dass** der Abstand (D) wenigstens 1/4 oder 1/3 einer Breite (B) jeder Federzunge (2.1, 2.2) beträgt.

8. Verbindung gemäß einem der Ansprüche 1 bis 7, **dadurch gekennzeichnet, dass** der Fußteil (1) eine Bohrung (6) für einen Niet (7) oder eine Schraube umfasst.

9. Rohrstutzen (8) mit einer Klemmfeder (10), wobei die Klemmfeder (10) einen plattenförmigen Fußteil (1) und einen sich an diesem anschließenden Federteil (2) aufweist; wobei
der Federteil (2) an seinem vom Fußteil (1) abgewandten freien Ende wenigstens eine Kralle (3) zum Eindrücken in das Material einer übergeschobenen Entwässerungskomponente (11) aufweist;
**dadurch gekennzeichnet, dass**
der Federteil (2) mit einem Winkel von mehr als 90° gegenüber dem Fußteil (1) umgekantet oder umgebogen ist und durch wenigstens zwei nebeneinander angeordnete, sich vom Fußteil (1) aus erstreckende, unabhängig voneinander einfederbare Federzungen (2.1, 2.2) gebildet wird, die an ihrem vom Fußteil (1) abgewandten freien Ende jeweils wenigstens eine Kralle (3) aufweisen und dass die Klemmfeder (10) an einer äußeren oder inneren Oberfläche des Rohrstutzens (8) befestigt ist und die Umkantung oder Umbiegung zwischen dem Fußteil (1) und dem Federteil (2) einem freien Ende des Rohrstutzens (8) zugewandt ist.

10. Rohrstutzen (8) gemäß Anspruch 9, **dadurch gekennzeichnet, dass** der Rohrstutzen (8) eine Einprägung (9) aufweist, in welche der Fußteil (1) der Klemmfeder (10) eingesetzt ist, wobei die Einprägung (9) eben ausgeführt ist.

11. Einlauftrichter oder Wasserfangkasten mit einem Rohrstutzen (8) gemäß einem der Ansprüche 9 oder 10 zum Anschluss eines Rohrbogens oder eines Fallrohres.

## Claims

1. Connection of drainage components (8, 11) having a first drainage component (8), to the surface of which a clamping spring (10) is fastened, and a second drainage component (11), which is pushed over the clamping spring (10), wherein the clamping spring (10) comprises a plate-shaped foot part (1) and a spring part (2) adjoining the latter;
wherein the spring part (2) comprises at least one claw (3) at its free end facing away from the foot part (1);
wherein a spring force of the clamping spring (10) presses the at least one claw (3) into the material of the drainage component (11) pushed over; **characterized in that**
the spring part (2) is folded or bent over at an angle of more than 90° relative to the foot part (1) and is formed by at least two spring tongues (2.1, 2.2) which are arranged adjacent to each other, extend from the foot part (1), can resiliently engage independently from each other and each have at least one claw (3) at their free end facing away from the foot part (1).

2. Connection according to claim 1, **characterized in that** the spring part (2) is bent or folded over by more than 120° or 135° relative to the foot part (1).

3. Connection according to one of claims 1 or 2, **characterized in that** each spring tongue (2.1, 2.2) is designed angularly, having a web (4) adjoining the foot part (1) and an end section (5) adjoining the web (4) at the end facing away from the foot part (1), which end section (5) carries the at least one claw (3) at its free end and is bent from the web (4) in a direction away from the foot part (1).

4. Connection according to claim 3, **characterized in that** the web (4) extends at least substantially parallel to the foot part (1) and the end section (5) extends at an acute angle to the foot part (1).

5. Connection according to one of claims 1 to 4, **characterized in that** the spring tongues (2.1, 2.2) each have at least two claws (3) at their free end.

6. Connection according to one of claims 1 to 5, **characterized in that** the spring tongues (2.1, 2.2) extend parallel to one another at a distance (D).

7. Connection according to claim 6, **characterized in that** the distance (D) is at least 1/4 or 1/3 of a width (B) of each spring tongue (2.1, 2.2).

8. Connection according to one of claims 1 to 7, **characterized in that** the foot part (1) comprises a bore (6) for a rivet (7) or a screw.

9. Pipe socket (8) having a clamping spring (10), wherein the clamping spring (10) has a plate-shaped foot part (1) and a spring part (2) adjoining the latter; wherein the spring part (2) has at its free end facing away from the foot part (1) at least one claw (3) for pressing into the material of a drainage component (11) pushed over;
**characterized in that** the spring part (2) is folded or bent over at an angle of more than 90° relative to the foot part (1) and is formed by at least two spring tongues (2.1, 2.2) which are arranged adjacent to each other, extend from the foot part (1), can resiliently engage independently from each other and each have at least one claw (3) at their free end facing away from the foot part (1), and **in that** the clamping spring (10) is fastened to an outer or inner surface of the pipe socket (8), and the folded-over or bent-over portion between the foot part (1) and the spring part (2) faces a free end of the pipe socket (8).

10. Pipe socket (8) according to claim 9, **characterized in that** the pipe socket (8) has an indentation (9) into which the foot part (1) of the clamping spring (10) is inserted, wherein the indentation (9) is of flat design.

11. Inlet funnel or water collecting box having a pipe socket (8) according to one of claims 9 or 10 for connection of a pipe bend or a downpipe.

## Revendications

1. Assemblage de composants de drainage (8, 11) avec un premier composant de drainage (8), sur la surface duquel un ressort de serrage (10) est fixé, et avec un deuxième composant de drainage (11) qui est emboîté par-dessus le ressort de serrage (10), lequel ressort de serrage (10) possède une partie de pied (1) en forme de plaque et une partie formant ressort (2) qui fait suite à celle-ci,
dans lequel la partie formant ressort (2) présente au moins une griffe (3) à son extrémité libre tournée à l'opposé de la partie de pied (1) ;
dans lequel une force de ressort du ressort de serrage (10) enfonce l'au moins une griffe (3) dans le matériau du composant de drainage (11) emboîté par-dessus ;
**caractérisé en ce que** la partie formant ressort (2) est pliée ou courbée à un angle de plus de 90° par rapport à la partie de pied (1) et formée par au moins deux languettes de ressort (2.1, 2.2) disposées l'une à côté de l'autre, qui s'étendent à partir de la partie de pied (1) et peuvent s'infléchir indépendamment l'une de l'autre, présentant chacune au moins une griffe (3) à leur extrémité libre tournée à l'opposé de la partie de pied (1).

2. Assemblage selon la revendication 1, **caractérisé en ce que** la partie formant ressort (2) est pliée ou courbée à plus de 120° ou 135° par rapport à la partie de pied (1).

3. Assemblage selon l'une des revendications 1 ou 2, **caractérisé en ce que** chaque languette de ressort (2.1, 2.2) forme un angle, avec une barrette (4) qui fait suite à la partie de pied (1) et avec une section d'extrémité (5) qui fait suite à la barrette (4) à l'extrémité tournée à l'opposé de la partie de pied (1), qui porte l'au moins une griffe (3) à son extrémité libre et qui est pliée à partir de la barrette (4) dans une direction qui l'éloigne de la partie de pied (1).

4. Assemblage selon la revendication 3, **caractérisé en ce que** la barrette (4) est au moins sensiblement parallèle à la partie de pied (1) et la section d'extrémité (5) forme un angle aigu avec la partie de pied (1).

5. Assemblage selon l'une des revendications 1 à 4, **caractérisé en ce que** les languettes de ressort (2.1, 2.2) présentent chacune au moins deux griffes (3) à leur extrémité libre.

6. Assemblage selon l'une des revendications 1 à 5, **caractérisé en ce que** les languettes de ressort (2.1, 2.2) s'étendent parallèlement l'une à l'autre avec un écartement (D).

7. Assemblage selon la revendication 6, **caractérisé en ce que** l'écartement (D) représente au moins 1/4 ou 1/3 d'une largeur (B) de chaque languette de ressort (2.1, 2.2).

8. Assemblage selon l'une des revendications 1 à 7, **caractérisé en ce que** la partie de pied (1) comporte un alésage (6) pour un rivet (7) ou une vis.

9. Raccord de tuyauterie (8) avec un ressort de serrage (10), lequel ressort de serrage (10) possède une partie de pied (1) en forme de plaque et une partie formant ressort (2) qui fait suite à celle-ci,
dans lequel la partie formant ressort (2) présente, à son extrémité libre tournée à l'opposé de la partie de pied (1), au moins une griffe (3) destinée à s'enfoncer dans le matériau d'un composant de drainage (11) emboîté par-dessus ; **caractérisé en ce que** la partie formant ressort (2) est pliée ou courbée à un angle de plus de 90° par rapport à la partie de pied (1) et formée par au moins deux languettes de ressort (2.1, 2.2) disposées l'une à côté de l'autre, qui s'étendent à partir de la partie de pied (1) et peuvent s'infléchir indépendamment l'une de l'autre, présentant chacune au moins une griffe (3) à leur extrémité libre tournée à l'opposé de la partie de pied (1), et **en ce que** le ressort de serrage (10) est fixé sur une surface extérieure ou intérieure du raccord de tuyauterie (8) et le pliage ou le cintrage entre la partie de pied (1) et la partie formant ressort (2) est tourné vers une extrémité libre du raccord de tuyauterie (8).

10. Raccord de tuyauterie (8) selon la revendication 9, **caractérisé en ce que** le raccord de tuyauterie (8) présente une empreinte (9) dans laquelle la partie de pied (1) du ressort de serrage (10) est insérée, l'empreinte (9) étant réalisée de forme plane.

11. Trémie ou boîte à eau avec un raccord de tuyauterie (8) selon l'une des revendications 9 ou 10, pour le raccordement d'un coude de tuyau ou d'un tuyau de descente.
